# EUROPEAN PATENT SPECIFICATION

(11) **EP 2 393 838 B1**
(45) Date of publication and mention of the grant of the patent: **11.09.2013**
(21) Application number: 10720982.7
(22) Date of filing: 09.02.2010
(51) Int. Cl.: C08B 37/14, C13K 13/00

(54) **METHOD FOR MAKING PENTOSES AND PENTOSE-BASED SOLUBLE OLIGO/POLYSACCHARIDES FROM CEREALS**
VERFAHREN ZUR HERSTELLUNG VON PENTOSEN UND LÖSLICHEN OLIGO-/POLYSACCHARIDEN AUF PENTOSEBASIS AUS GETREIDE
PROCÉDÉS DE FABRICATION DE PENTOSES ET D'OLIGOSACCHARIDES/POLYSACCHARIDES SOLUBLES À BASE DE PENTOSES À PARTIR DE CÉRÉALES

(30) Priority: 09.02.2009 GB 0902018
(43) Date of publication of application: 14.12.2011
(73) Proprietor: Fugeia NV, 3001 Heverlee (BE)
(72) Inventor: BROEKAERT, Willem, B-1700 Dilbeek (BE)
(74) Representative: Bird, Ariane
(86) International application number: PCT/BE2010/000008
(87) International publication number: WO 2010/088744

(56) References cited:
- JP-A- 2009 013 088
- SANJUST E ET AL: "Note. Xylose production from durum wheat bran: Enzymic versus chemical methods." FOOD SCIENCE AND TECHNOLOGY INTERNATIONAL, vol. 10, no. 1, February 2004 (2004-02), pages 11-14, XP009138575 ISSN: 1082-0132 cited in the application
- DATABASE WPI Week 197924 Thomson Scientific, London, GB; AN 1979-45182B XP002600494 & JP 54 012539 B (AJINOMOTO KK) 23 May 1979 (1979-05-23)
- AACHARY A A ET AL: "Value addition to corncob: Production and characterization of xylooligosaccharides from alkali pretreated lignin-saccharide complex using Aspergillus oryzae MTCC 5154" BIORESOURCE TECHNOLOGY, ELSEVIER BV, GB LNKD- DOI:10.1016/J.BIORTECH.2008.06.050, vol. 100, no. 2, 1 January 2009 (2009-01-01), pages 991-995, XP025535095 ISSN: 0960-8524 [retrieved on 2008-08-13]
- SWENNEN KATRIEN ET AL: "Large-scale production and characterisation of wheat bran arabinoxylooligosaccharides" JOURNAL OF THE SCIENCE OF FOOD AND AGRICULTURE, WILEY & SONS, CHICHESTER, GB LNKD- DOI:10.1002/JSFA.2470, vol. 86, no. 11, 1 August 2006 (2006-08-01), pages 1722-1731, XP002457409 ISSN: 0022-5142
- MAES C ET AL: "Relative activity of two endoxylanases towards water-unextractable arabinoxylans in wheat bran" JOURNAL OF CEREAL SCIENCE, ACADEMIC PRESS LTD, XX LNKD- DOI:10.1016/J.JCS.2003.08.001, vol. 39, no. 2, 1 March 2004 (2004-03-01), pages 181-186, XP002457408 ISSN: 0733-5210

## Description

### FIELD OF THE INVENTION

The present invention relates to a method for the isolation and extraction from arabinoxylan-containing plant material, in particular cereal material, of solubilised arabinoxylan depolymerisation products, such as pentoses and/or soluble pentose-based oligo/polysaccharides, which can be used as food, beverage, or feed ingredients or as substrates for fermentation or chemical modifications.

### BACKGROUND OF THE INVENTION

Cereals contain 5-10% of arabinoxylan, which together with starch, cellulose and β-glucan constitute the most abundant cereal carbohydrates. Arabinoxylan (AX) consists of a main chain of β-1,4-linked D-xylopyranoside (xylose) units that are either unsubstituted, monosubstituted with a single α-L-arabinofuranoside (arabinose) at either C-(*O*)-2 or C-(*O*)-3, or disubstituted with single α-L-arabinofuranoside units at C-(*O*)-2 and C-(*O*)-3 (Andersson and Aman 2001; Izydorczyk and Biliaderis, 1995). The pentoses xylose and arabinose are thus the main monomers of AX, and AX are therefore also called pentosans. Less abundant substituents attached to the C-(O)-2 position of the xylose residues can be glucuronic acid, 4-O-methyl glucuronic acid, or short oligomers consisting of L-arabinose, D-xylose, D-galactose, D-glucose and/or uronic acids, while acetyl groups can be linked to the C-(O)-2 and/or C-(O)-3 position of the xylose residues. Hydroxycinnamic acids, mainly ferulic acid, and to a lesser extent dehydrodiferulic acid, p-coumaric acid, and sinapic acid, are present as substituents as well, and they are generally linked to the C-(O)-5 position of terminal arabinose units (Andersson and Aman 2001; Izydorczyk and Biliaderis, 1995).

AX in cereals are either water-extractable or water-unextractable (Gruppen et al. 1992; Courtin and Delcour, 2001). Water-unextractable AX (WU-AX) can be partially solubilised under alkaline conditions or by using enzymes, such as endoxylanases. WU-AX bind large amounts of water. The main fraction of naturally occurring water-extractable AX (WE-AX) have very high molecular masses (up to 800,000 Dalton) depending on the source and extraction method, and have an extraordinary viscosity forming potential. In cereals, the major part of AX are WU-AX. Especially the bran, the outer parts of cereal fruits, is rich in WU-AX.

Arabinoxylan-oligosaccharides (AXOS), pentose-based oligosaccharides derived from AX, have been shown to exert prebiotic properties (Cloetens et al. 2008; Courtin et al. 2008; Van Craeyveld et al 2008). Prebiotics are compounds, usually non-glucosidic oligosaccharides, that cannot be digested by enzymes of the upper gastro-intestinal tract but are selectively fermented by some types of intestinal bacteria in the large intestine (Gibson and Roberfroid, 1995; Roberfroid, 1988; Van Loo, 2004). The presence of prebiotics in the diet causes a shift in the composition and metabolism of the intestinal bacterial population, typically characterised by a relative increase in *Lactobacillus* and *Bifidobacterium* species. This shift in the microbiota of the intestine is associated with improved overall health, reduced gut infections, increased levels of intestinal short chain fatty acids, better absorption of minerals, better transit and suppression of colon cancer initiation (Van Loo, 2004). AXOS-containing preparations can therefore find wide uses as ingredients for food, beverage and feed products. Neither AX nor its pentose components xylose and arabinose are fermented by standard strains of the yeast *Saccharomyces cerevisiae,* and therefore they do not contribute to the production of ethanol by fermentation of cereals. However, yeast strains can be engineered such that they can utilise and ferment xylose and arabinose (Hahn-Hägerdal et al 2007). The pentose xylose also finds applications in the pharmaceutical, cosmetic, and food industry, and as a substrate for enzymatic or chemical conversion to polyols, such as xylitol, which can be used as a non-cariogenic sweetener. The pentose arabinose is widely used as an intermediate in the production of pharmaceuticals, such as nucleoside analogue antiviral agents.
Several methods have been proposed to isolate pentoses or pentose-based oligosaccharides from cereal bran.

Yamada et al. (1993) disclosed an extraction method involving chemical extraction of wheat bran using a concentrated alkaline solution, followed by neutralisation, removal of the salts, enzymic hydrolysis with endoxylanase, and chromatography on a carbon column (Yamada et al., 1993). Other methods involving alkaline extraction of AX from wheat bran are described in US-A-3,879,373 and WO98/31713. The main drawback of these methods is that the extraction step with high concentration alkali is environment-unfriendly, and requires costly removal of the chemicals from the different product streams. AX have also been extracted from cereal bran using alkaline peroxide solutions (Maes and Delcour, 2001; Hollmann and Lindhauer, 2005) yet these methods require large quantities of costly hydrogen peroxide. The AX extracted by alkaline solutions have a high molecular weight and are devoid of hydroxycinnamic acid substituents (Hollmann and Lindhauer, 2005), most likely due to saponification of the ester link. The lack of hydroxycinnamic acid substituents can be a drawback for the use of such preparations in food, beverage or feed applications, since the hydroxycinnamic acid substituents confer desired antioxidant properties to the AX or AXOS (Ohta et al 1997; Yuan et al 2005).

WO02/067698 describes a complex method to fractionate bran by first treating bran with starch hydrolysing enzymes followed by mechanical separation into a water-insoluble fraction, a protein-rich fraction and a glucose-rich fraction. The water-insoluble fraction is then treated with endoxylanases or a cocktail comprising endoxylanases and other enzymes such as glucanases, cellulases, pectinases or phytases, and the resulting solubilized fraction is further purified by ultrafiltration to obtain an AXOS-enriched fraction. Several similar procedures have been described in which bran is first treated with an amylase to convert starch in water-soluble maltodextrins, where after the slurry is filtered and the residue treated with endoxylanase to solubilise low molecular weight AXOS (Maes et al 2004; Swennen et al. 2006; WO2006/027529).

Non-enzymatic methods have been developed for the isolation of low molecular weight AXOS from cereal by-products based on autohydrolysis of AX in aqueous solutions under high pressure and high temperature conditions (Garrote et al., 2002, Kabel et al. 2002). Extraction of WU-AX from cereal bran using acidic solutions at high temperature has been described as well (Sanjust et al 2004; Palmarola-Adrados et al. 2005), and these methods are generally more suited to produce pentoses rather than pentose-based oligosaccharides, due to extensive acid-catalysed hydrolysis of the polysaccharide links.

Palmarola-Adrados et al. (2005) have investigated the combination of acidic treatment and enzymatic treatment of wheat bran. They found that pretreatment of bran using dilute acids at high temperature improves the production of glucose when followed by treatment with an enzyme cocktail containing cellulases and endoxylanases. However, pretreatment with dilute acids at high temperature did not give an increase in yield of the pentoses. It was concluded by these authors that the endoxylanase was not essential in the enzyme mixture, as only extra glucose was released during the enzymatic hydrolysis step (Palmarola-Adrados et al. 2005).

It is an object of the present invention to provide more efficient methods for the extraction and isolation of solubilised arabinoxylan depolymerisation products, such as pentoses and/or pentose-based soluble oligo/polysaccharides from arabinoxylan-containing plant material, such as cereal bran, that are more efficient and have a lower overall operational cost than the methods known from the prior art.

### SUMMARY OF THE INVENTION

The present invention provides a method for the extraction and isolation of solubilised arabinoxylan depolymerisation products, using arabinoxylan-containing plant material as a starting material. Preferably, such solubilised arabinoxylan depolymerisation product is any one of soluble arabinoxylan, arabinoxylan-oligosaccharides, xylose and arabinose. Said method comprises the mashing of said arabinoxylan-containing plant material in water and treating it with an appropriate concentration of an endoxylanase enzyme preparation in order to enzymatically depolymerise and solubilise a fraction of the arabinoxylans comprised in said plant material, wherein said endoxylanase treatment is followed or preceded by an acid treatment. This acid treatment comprising the incubation of said plant material in an acidified aqueous mash in order to obtain a depolymerisation and solubilisation of another fraction of the arabinoxylans comprised in said plant material. Preferably, said acidified mash is obtained by adding to said mash a strong acid to a final concentration between 0.02 and 0.4 N. The method further comprises the separation from said mashed plant material of a water-solubilised fraction, which comprises at least part of the solubilised arabinoxylan depolymerisation products.

### DETAILED DESCRIPTION

### List of figures

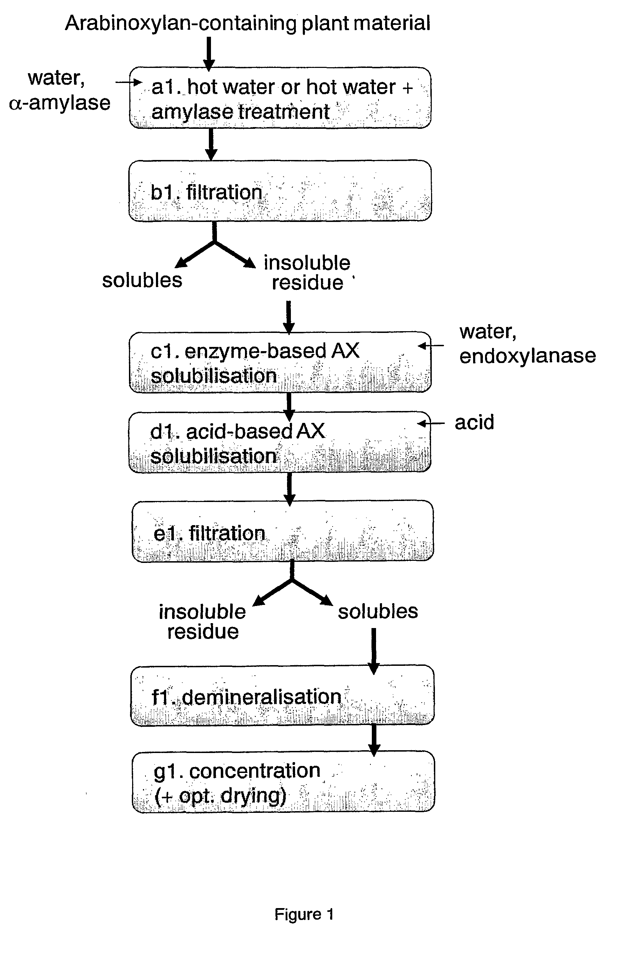

**Figure 1****:** Schematic representation of a method for fractionation of arabinoxylan-containing plant material, such as cereal bran, whereby an enzyme-based arabinoxylan solubilisation step and an acid-based arabinoxylan solubilisation step are applied sequentially without an intermittent water-soluble/water-insoluble separation step.

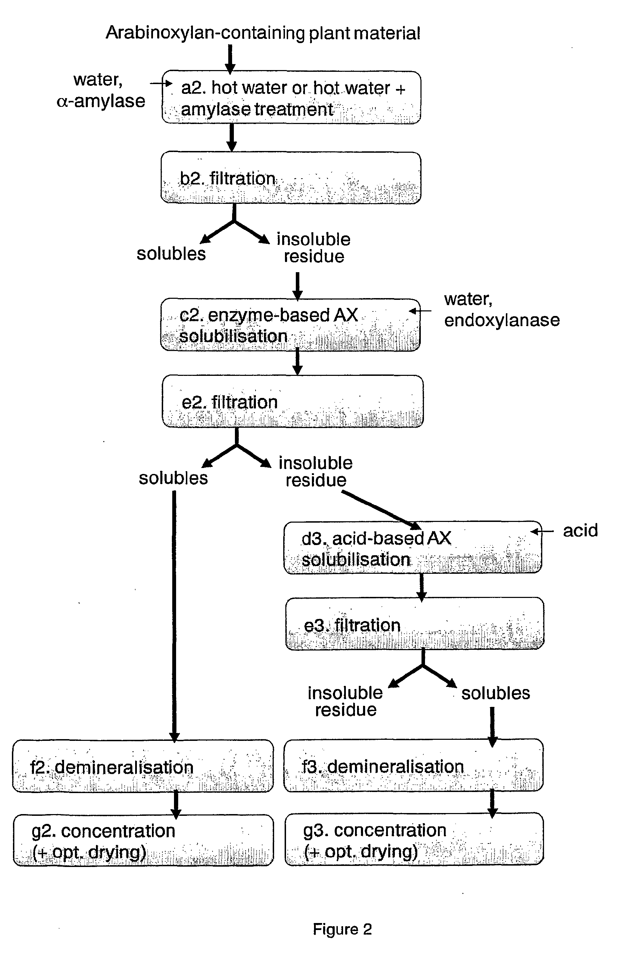

**Figure 2****:** Schematic representation of a method for fractionation of arabinoxylan-containing plant material, such as cereal bran, whereby an enzyme-based arabinoxylan solubilisation step and an acid-based arabinoxylan solubilisation step are applied sequentially with an intermittent water-soluble/water-insoluble separation step.

### Description

The present invention is based on the finding that the incubation of arabinoxylan-containing plant material in an acidified aqueous mash preceded by an incubation of said plant material in a mash comprising an endoxylanase enzyme preparation allows for the extraction and isolation of an important fraction of the total amount of arabinoxylan comprised in said plant material under the form of solubilised arabinoxylan depolymerisation products. Preferably, such solubilised arabinoxylan depolymerisation product is any one of soluble arabinoxylan, arabinoxylan-oligosaccharides, xylose or arabinose. Moreover, the isolation yield of solubilised arabinoxylan depolymerisation products using the combined endoxylanase and acid treatment was significantly higher than obtained with either an endoxylanase or acid treatment only.

So in a first object the present invention provides a method for the extraction and isolation of solubilised arabinoxylan depolymerisation products using arabinoxylan-containing plant material as a starting material. Said soluble arabinoxylan depolymerisation products can either be soluble arabinoxylan, arabinoxylan-oligosaccharides, xylose or arabinose or mixtures of two or more of these compounds. Said method comprises the mashing of the arabinoxylan-containing plant material in water and treating it with an appropriate concentration of an endoxylanase enzyme preparation in order to enzymatically depolymerise a fraction of the arabinoxylans comprised in said plant material, wherein said endoxylanase treatment is followed by an acid treatment. This acid treatment comprising the incubation of said plant material in an acidified aqueous mash in order to obtain a depolymerisation and solubilisation of another fraction of the arabinoxylans comprised in said plant material. The method further comprises the separation of one or more water-solubilised fractions from said mashed plant material, said water-solubilised fractions comprising at least part of the solubilised arabinoxylan depolymerisation products.

In a preferred embodiment of the method of the present invention the arabinoxylan-containing plant material is mashed in water and subjected to said endoxylanase treatment in order to enzymatically depolymerise and solubilise a first fraction of the arabinoxylans comprised in said plant material. The endoxylanase treatment is then followed by said acid treatment in order to depolymerise and solubilise a second fraction of the arabinoxylans comprised in said plant material. Water-solubilised fractions comprising solubilised arabinoxylan depolymerisation products can be isolated at a single or several moments in the extraction process. For instance, following endoxylanase treatment, the endoxylanase-containing mash of said arabinoxylan-containing plant material can be acidified in order to subject the mash to said acid treatment. Upon completion of the acid treatment the mash is separated into i) a water-solubilised fraction comprising both the enzymatic and acid solubilised arabinoxylan depolymerisation products and ii) the water-insoluble plant material residue. Alternatively, said endoxylanase treatment is followed by a separation of said mash into i) a first water-solubilised fraction comprising enzymatically solubilised arabinoxylan depolymerisation products and ii) a first water-insoluble plant material residue. Said first water-insoluble plant residue is then resuspended in water in order to obtain a second mash, which is subjected to said acid treatment followed by separation of said second mash into iii) a second water-solubilised fraction comprising solubilised arabinoxylan depolymerisation products and iv) a second water-insoluble plant material residue.

Preferably, the arabinoxylan-containing plant material used as starting material in any of the above embodiments of the method according to the present invention, is bran, inflorescence by-products, stem by-products, or spent grains. More preferably, the arabinoxylan-containing plant material is bran, most preferably bran derived from cereals, such as wheat, durum wheat, rye, oats, barley, maize, sorghum, or rice. Most preferably, the AX-containing plant material is (durum) wheat bran. Furthermore, it may be advantageous that the arabinoxylan-containing plant material used in the method according to the present invention is destarched plant material. More preferably, said destarched plant material is obtained by mashing arabinoxylan-containing plant material in water in the presence of an appropriate concentration of an α-amylase and subsequently separating the insoluble destarched plant material from the liquid fraction containing the solubilised starch derived material.

Preferably, the endoxylanase treatment as used in any of the above embodiments of the method of the present invention, involves the incubation of the mash with an enzyme preparation containing at least endoxylanase activity. Examples of commercial preparations with predominant endoxylanase activity include, but are not limited to, Shearzyme™ 500L (Novozymes), Pentopan™ Mono BG (Novozymes), Pulpzyme™ (Novozymes), Ecopulp™ TX-200A (AB Enzymes), Veron™ 191 (AB Enzymes), Veron™ Special (AB Enzymes), Multifect™ CX 12 L (Genencor/Danisco), Grindamyl™ H640 (Danisco), and Grindamyl™ Powerbake™ (Danisco). The arabinoxylan hydrolysis step involves incubation for an appropriate period of time, such as, but not limited to, between 1 and 24 hours, more preferably between 2 and 12 hours, for instance between 3 and 9 hours, of the slurry at temperatures and pH values as recommended by the commercial developer of the endoxylanase enzyme preparation used for arabinoxylan hydrolysis, typically at a pH between 4 and 8, such as between 4 and 6. Preferably, the dominant endoxylanase in said endoxylanase enzyme preparation is an endoxylanase with high selectivity for WU-AX, with a substrate selectivity factor (SSFCHROM), as defined in Moers et al. (2005), that is at least 2 or higher, preferably at least 3 or higher, such as 4 or higher. The dominant endoxylanase in said endoxylanase enzyme preparation is preferably an endoxylanase of Glycosyl Hydrolase Family 11 (Henrissat 1991). Other enzyme activities present in the endoxylanase enzyme preparation may be, but are not limited to, arabinofuranosidase, beta-glucanase, exoxylanase, beta-xylosidase, and/or xylobiase activities.

Preferably, said acid treatment as applied in any of the above embodiments of the method of the present invention, involves the use of a strong acid, such as for instance but not limited to phosphoric acid, hydrochloric acid, perchloric acid, nitric acid, or sulfuric acid, which is added to the mash to a final concentration between 0.02 N and 0.4 N, preferably between 0.02 and 0.2 N, for instance between 0.02 and 0.1N. Preferably, the concentration of said strong acid is determined with respect to total amount of water in the mash. Typically, the addition of a strong acid to the mash results in a pH of the mash below 3, more preferably below 2.5, most preferably below 2. More preferably the strong acid is sulfuric acid and is added to the aqueous mash at a concentration between 0.02 and 0.2 N (0.01 and 0.1 M), preferably between 0.02 and 0.1 N (0.01 and 0.05 M). The temperature of the mash during acid treatment is preferably between 80°C and 180°C, more preferably between 90°C and 160°C, such as between 100 and 140°C, and the incubation time is between 5 and 180 minutes. The pH, temperature and incubation time parameters arebeing selected such that substantial solubilisation of arabinoxylans occurs, yet that the selected parameters are at the boundary of conditions that cause excessive formation of furfural and colored Maillard products when the stringency is increased (the lower the pH the higher the stringency, the higher the temperature the higher the stringency, and the longer the incubation time the higher the stringency). For instance, sulfuric acid is added to the mash at a concentration of 0.025 M, followed by the incubation of the mash at 120°C during 45 minutes. By substantial solubilisation of arabinoxylans through acid treatment is meant that the applied acid concentration results in the extraction of an amount of water-solubilised arabinoxylan depolymerisation products (soluble arabinoxylan, arabinoxylan-aligosaccharides, free xylose or free arabinose or a mixture thereof) from a given arabinoxylan-containing plant material, that is at least three times more than is obtained at a pH between 6 and 7, while maintaining any other temperature and incubation conditions constant.

The water-solubilised fractions as isolated in any one of the above embodiments of the method of the present invention are preferably separated from said water-insoluble fractions using either a gravitational sieve, a filter press, a rotary filter, a centrifugal sieve, a belt filter, a vacuum filter, a screw press, a decanter, a centrifuge, or a centrifugal decanter, or a combination of these separation means, or any other means known to the skilled person

Optionally, the water-solubilised fractions comprising solubilised arabinoxylan depolymerisation products obtained according to any one of the above embodiments of the method of the present invention are further purified using filtration or chromatography techniques or combinations thereof to remove minerals and other impurities. Furthermore, these water-solubilised fractions may be concentrated, preferably after said further purification, using means for water removal, such as falling film or plate evaporator, reverse osmosis filtration, nanofiltration, or a combination of these concentration means. These water solubilised fractions may also be dried or otherwise obtained in a dry form, preferably after either or both said further purification and said concentration, for instance using spray drying equipment or by crystallisation. Preferably, the water-solubilised fractions comprising solubilised arabinoxylan depolymerisation products obtained according to any one of the above embodiments of the method of the present invention or the preparations derived thereof through further purification, comprise on a dry matter basis at least 40% (w/w), more preferably at least 50%, most preferably at least 60% for instance at least 70% or 80% arabinoxylan depolymerisation products. Said soluble arabinoxylan depolymerisation products being either soluble arabinoxylan, arabinoxylan-oligosaccharides, xylose and arabinose or mixtures of two or more of these compounds.

Optionally, a water-solubilised fraction comprising solubilised arabinoxylan depolymerisation products obtained according to any one of the embodiments of the method of the present invention may be processed using filtration or chromatography techniques in order to obtain preparations comprising an increased concentration of a particular solubilised arabinoxylan depolymerisation product, either soluble arabinoxylan, arabinoxylan-oligosaccharides, xylose or arabinose, as compared to the concentration of this product in said water-solubilised fraction. For example, the a water-solubilised fraction comprising solubilised arabinoxylan depolymerisation products are processed in order to obtain preparation enriched in xylose or arabinose. Optionally, the water-insoluble fractions obtained according to any of the above embodiments of the method according to the present invention are washed with water before further treatment. Such washing step may comprise washing the water-insoluble cake with water in a filter, pressed filter, belt filter, sieve, or centrifugal decanter, as preferred by the skilled person. Preferably, the washing is performed in a counter-current flow between water-insoluble and fresh water.

Preferably, the method of the present invention including any of its embodiments disclosed herein results in the extraction of at least 50% (w/w), more preferably at least 60% (w/w), most preferably at least 70% (w/w) of the water-unextractable arabinoxylan comprised in the arabinoxylan-containing material used as starting material. Preparations enriched in soluble arabinoxylan and/or arabinoxylan-oligosaccharides can be used as a food, beverage or feed additive. Such preparation can be added to a food, beverage or feed product, for instance to improve taste, mouthfeel or texture of the product, to obtain a health benefit upon ingestion of the product, and/or to improve the efficiency of food utilisation in animals. Arabinoxylan-oligosaccharides are known to be prebiotics, i.e. a non-digestible food, beverage or feed ingredient that beneficially affects the host by selectively stimulating growth and/or activity of a limited number of bacteria in the lower part of the gastro-intestinal tract (Gibson and Roberfroid, 1995; Roberfroid, 1998; Van Loo, 2004).

Preparations enriched in the free pentoses (xylose and arabinose) can be used as a food, beverage or feed additive, as a substrate for microbial fermentation for production of desired fermentations products such as ethanol, or as a substrate for enzymatic or chemical conversion to produce other chemicals, such as for instance the polyols xylitol and arabitol.

In a first particular embodiment the invention provides a process for fractionation of arabinoxylan-containing plant material on industrial scale which comprises the following steps (figure 1):
(a1) treatment of the arabinoxylan-containing plant material with hot water, optionally in presence of an enzyme mixture comprising at least an alpha amylase, in order to extract the water soluble compounds and starch from said arabinoxylan-containing plant material;
(b1) separation of the mash of step (a1) into a water-insoluble fraction and a water-solubilised fraction, comprising the extracted water-soluble compounds and solubilised starch and/or solubilised starch hydrolysis products, by filtration or centrifugation;
(c1) mixing the water-insoluble fraction obtained in step (b1) with water and addition to the resulting mash of an enzyme preparation comprising at least an endoxylanase, and incubating said mash during an appropriate period of time in order to extract a first fraction of solubilised arabinoxylan depolymerisation products from said water-insoluble fraction;
(d1) addition of an acid to the mash of step (c1), and incubation of the mash for an appropriate time in order to extract a second fraction of solubilised arabinoxylan depolymerisation products from said water-insoluble fraction;
(e1) separation of the mash of step (d1) into a water-insoluble fraction and a water-solubilised fraction by filtration and/or centrifugation, said water-solubilised fraction comprising both said first and second fractions of solubilised arabinoxylan depolymerisation products,

Optionally the water-solubilised fraction of step (e1) is further processed in either step (f1) and/or step (g1):
(f1) demineralisation of the water-solubilised fraction of step (e1), e.g. by using ion exchange resins, electrodialysis, and/or membrane filtration
(g1) concentration of the water-solubilised fraction of step (f1), or (e1) in case the demineralisation step (f1) was omitted, by evaporation and/or membrane filtration to obtain a syrup, optionally followed by drying or crystallisation to obtain a dry product.

The order of steps (c1) and (d1) can be reversed. In this case steps (c1') and (d1') proceed as follows:
(c1') mixing the water-insoluble fraction of step (b1) with water and addition to the resulting mash of an acid, and incubation of the mash for an appropriate time
(d1') adjustment of the pH of the mash of step (c1') to a value between 4 and 9, followed by addition of an enzyme mixture comprising at least an endoxylanase, and incubation of the mash for an appropriate time

However, the order of steps (c1) followed by (d1) is preferred over the order of step (c1') followed by (d1'), because the former does not require pH adjustment and cooling in between the two steps.

The yield of said solubilised arabinoxylan depolymerisation products in the water-solubilised fraction of step (e1) was significantly higher than when either one of the endoxylanase treatment of steps (c1) or (d1') or the acid treatment of either steps (d1) or (c1') were omitted.

In a second particular embodiment, the invention provides a process for fractionation of arabinoxylan-containing plant material on industrial scale which comprises the following steps (figure 2):
(a2) treatment of the arabinoxylan-containing plant material with hot water, optionally in presence of an enzyme mixture comprising at least an alpha amylase, in order to extract the water soluble compounds and starch from said arabinoxylan-containing plant material;
(b2) separation of the mash of step (a2) into a water-insoluble fraction and a water-solubilised fraction, comprising the water-soluble compounds and solubilised starch and/or solubilised starch hydrolysis products, by filtration or centrifugation
(c2) mixing the water-insoluble fraction obtained in step (b2) with water and addition to the resulting mash of an enzyme preparation comprising at least an endoxylanase, and incubating said mash during an appropriate period of time in order to extract a first fraction of solubilised arabinoxylan depolymerisation products from said water-insoluble fraction;
(e2) separation of the mash of step (c2) into a water-insoluble fraction and a water-solubilised fraction by filtration and/or, centrifugation; said water-solubilised fraction comprising said first fraction of solubilised arabinoxylan depolymerisation products

Optionally the water-solubilised fraction of step (e2) is further processed in either step (f2) and/or step (g2):
(f2) demineralisation of the water-solubilised fraction of step (e2), e.g. by using ion exchange resins, electrodialysis, and/or membrane filtration
(g2) concentration of the water-solubilised fraction of step (f2), or (e1) in case demineralisation step (f1) was omitted,, by evaporation and/or membrane filtration to obtain a syrup, optionally followed by drying or crystallisation to obtain a dry product.
(d3) mixing the water-insoluble fraction of step (e2) with water and addition to the resulting mash of an acid, and incubation of the mash for an appropriate time in order to extract a second fraction of solubilised arabinoxylan depolymerisation products from said water-insoluble fraction;
(e3) separation of the mash of step (d3) into a water-insoluble fraction and a water-solubilised fraction by filtration and/or centrifugation, said water-solubilised fraction comprising said second fraction of solubilised arabinoxylan depolymerisation products,
   optionally the water-solubilised fraction of step (e2) is further processed in either step (f3) and/or step (g3),
(f3) demineralisation of the water-solubilised fraction of step (e3), e.g. by using ion exchange resins, electrodialysis, and/or membrane filtration
(g3) concentration of the water-solubilised fraction of step (f3), or (e1) in case deminiralisation step (f1) was omitted, by evaporation and/or membrane filtration to obtain a syrup, optionally followed by drying or crystallisation to obtain a dry product.

Preferably, the arabinoxylan-containing plant material used in said first and second particular embodiment is bran, inflorescence by-products, stem by-products, or spent grains. More preferably, the arabinoxylan-containing plant material is bran, most preferably bran derived from cereals, such as wheat, durum wheat, rye, oats, barley, maize, sorghum, or rice. Most preferably, the AX-containing plant material is (durum) wheat bran.

Steps (a1) and (a2) are preferably performed at a temperature between 75°C and 120°C, preferably between 80°C and 110°C. If an alpha-amylase is used it is preferably selected among the thermostable alpha-amylases that have an optimal temperature for alpha-amylase activity in this temperature range. Examples of commercial amylase preparations with such properties include, but are not limited to, Termamyl 120 L (Novozymes, Denmark), BAN 480L (Novozymes, Denmark), Multifect AA 1200 L (Genencor/Danisco), Amylyve™ A 30 (Lyven, France), Gamalpha™ HT 120 L (AB Enzymes, Germany), and Alphastar™ (Dyadic, USA). Such thermostable amylase preparations are obtained from bacteria like *Bacillus licheniformis, B. amyloliquefaciens, and B. subtilis* or fungi like *Aspergillus niger* or *A. oryzae.* The incubation time of steps (a1) and (a2) is between 5 and 180 minutes.

The enzyme-based arabinoxylan solubilisation steps (c1), (d1') or (c2) involves incubation of the mash with an enzyme preparation containing at least endoxylanase activity. Examples of commercial preparations with predominant endoxylanase activity include include, but are not limited to, Shearzyme™ 500L (Novozymes), Pentopan™ Mono BG (Novozymes), Pulpzyme™ (Novozymes), Ecopulp™ TX-200A (AB Enzymes), Veron™ 191 (AB Enzymes), Veron™ Special (AB Enzymes), Multifect™ CX 12 L (Genencor/Danisco), Grindamyl™ H640 (Danisco), and Grindamyl™ Powerbake™ (Danisco). The arabinoxylan hydrolysis step involves incubation for an appropriate duration of time, such as, but not limited to, between 1 and 24 hours, more preferably between 2 and 12 hours, for instance between 3 and 9 hours,, of the slurry at temperatures and pH values as recommended by the commercial developer of the endoxylanase enzyme preparation used for arabinoxylan hydrolysis, typically at a pH between 4 and 8, such as between 4 and 6. Preferably, the endoxylanase is an endoxylanase with high selectivity for WU-AX, with a substrate selectivity factor (SSF_{CHROM}), as defined in Moers et al. (2005), that is at least 2 or higher, preferably at least 3 or higher, such as 4 or higher. The endoxylanase is preferably an endoxylanase of Glycosyl Hydrolase Family 11 (Henrissat 1991). Other enzyme activities present in the endoxylanase enzyme preparation may be, but are not limited to, arabinofuranosidases, beta-glucanases, exoxylanases, beta-xylosidases, and/or xylobiases.

For steps (d1), (c1') and (d3) a strong acid, such as for instance but not limited to phosphoric acid, hydrochloric acid, perchloric acid, nitric acid, or sulfuric acid, is added to the mash to a final concentration between 0.02 N and 0.4 N, preferably between 0.02 and 0.2 N, for instance between 0.02 and 0.1N. Preferably, the concentration of said strong acid is determined with respect to total amount of water in the mash. Typically, the addition of a strong acid to the mash results in a pH of the mash below 3, more preferably below 2.5, most preferably below 2. More preferably the strong acid is sulfuric acid and the concentration is preferably between 0.02 and 0.10 N (0.01 and 0.05 M). The temperature is between 80°C and 180°C, preferably between 90°C and 160°C, such as between 100 and 140°C, and the incubation time is between 5 minutes and 180 minutes. The pH, temperature and incubation time parameters being selected such that substantial solubilisation of arabinoxylans occurs, yet that the selected parameters are at the boundary of conditions that cause excessive formation of furfural and coloured Maillard products when the stringency is increased (the lower the pH the higher the stringency, the higher the temperature the higher the stringency, and the longer the incubation time the higher the stringency). For instance, sulfuric acid is added to the mash at a concentration of 0.025 M, followed by the incubation of the mash at 120°C during 45 minutes. By substantial solubilisation of arabinoxylans through acid treatment is meant that the applied acid concentration results in the extraction of an amount of water-solubilised arabinoxylan depolymerisation products (soluble arabinoxylan, arabinoxylan-aligosaccharides, free xylose or free arabinose or a mixture thereof) from a given arabinoxylan-containing plant material, that is at least three times more than is obtained under conditions of a pH between 6 and 7 at the same temperature and incubation conditions..

The water-solubilised fractions isolated in steps (b1), (b2), (e1), (e2) and (e3) are preferably separated from said water-insoluble fractions using either a gravitational sieve, a filter press, a rotary filter, a centrifugal sieve, a belt filter, a vacuum filter, a screw press, a decanter, a centrifuge, or a centrifugal decanter, or a combination of these separation means, or any other means known to the skilled person. The water-solubilised fraction of steps (e1), (e2) or (e3) are highly enriched in solubilised arabinoxylan depolymerisation products and contain on a dry matter basis at least 40% (w/w), preferably at least 50%, such as at least 60% or at least 70% solubilised arabinoxylan depolymerisation products, in particular arabinoxylan-oligosaccharides, xylose and arabinose.
Optionally, the water-insoluble fractions of steps (b1), (b2), (e1), (e2) and (e3) are washed with water before further treatment. Such washing step may comprise washing the water-insoluble cake with water in a filter, pressed filter, belt filter, sieve, or centrifugal decanter, as preferred by the skilled person. Preferably, the washing is performed in a counter-current flow between water-insoluble and fresh water. Optionally, the arabinoxylan-oligosaccharides and the soluble arabinoxylans in the water-solubilised fraction of step (e1), (e2) or (e3) are further post-hydrolysed to xylose and arabinose. This is achieved by acidic hydrolysis through addition of a strong acid, such as for instance but not limited to phosphoric acid, hydrochloric acid, perchloric acid, nitric acid, or sulfuric acid, to a final concentration between 0.015 N and 0.2 N. Preferably the strong acid is sulfuric acid. The temperature is between 80°C and 180°C, preferably between 90°C and 160°C, such as between 100 and 140°C, and the incubation time is between 5 minutes and 120 minutes.

The demineralisation in steps (f1), (f2) and (f3) can be executed using techniques such as, but not limited to, nanofiltration, ultrafiltration, ion exchange chromatography, electrodialysis, size exclusion chromatography, absorption chromatography, or a combination of these separation means, to remove minerals, proteins and/or other impurities so as to increase the purity of the AXOS or pentose preparation. Such separation techniques can also be used to separate AXOS from pentoses, and/or to further separate xylose from arabinose.

The concentration in steps (g1), (g2) and (g3) is performed to increase the dry solids content of the preparation containing AXOS and/or pentoses, for instance but not limited to using a falling film or plate evaporator, reverse osmosis filtration, nanofiltration, or a combination of these concentration means. Any such concentration step can also precede the demineralisation steps (f1), (f2) and/or (f3). Optionally, the condensed water-solubilised fraction can be dried, for instance but not limited to using spray drying equipment, or crystallised in a crystalliser, in order to obtain a dry product.

### Definitions

In the context of the present invention the term "endoxylanase" refers to an enzyme that is able to hydrolyze internal glycosyl bonds linking xylose residues in xylose-containing polysaccharides. Such glycosyl bonds can be for instance the beta-1,4-glycosyl bond in beta-D-xylopyranosyl-1,4-beta-D-xylopyranosyl units of such polysaccharides. Endoxylanases can be derived from a variety of organisms, including plant, fungal (e.g. species of *Aspergillus, Penicillium, Disporotrichum, Neurospora, Fusarium, Humicola, Trichoderma*) or bacterial species (e.g. species of *Bacillus, Aeromonas, Streptomyces, Nocardiopsis, Thermomyces, Thermotoga*) (see for example WO92/17573, WO92/01793, WO91/19782, WO94/21785). Commercially available purified or partially purified endoxylanase preparations include but are not limited to Frimase™ B210 (Puratos), Shearzyme™ (Novozymes), Biofeed Wheat™ (Novozymes), Pentopan™ Mono BG (Novozymes), Pentopan™ 500 BG (Novozymes), Pulpzyme™ (Novozymes), Ecopulp™ (AB Enzymes), Veron™ 191 (AB Enzymes), Veron™ Special (AB Enzymes), Multifect™ CX12L (Genencor/Danisco), Spezyme™ CP (Genencor/Danisco), Grindamyl™ H640 (Danisco), and Grindamyl™ Powerbake™ (Danisco).

The term "endoxylanase with high selectivity for WU-AX" refers to an endoxylanase of which the value for the substrate selectivity factor (SSF_{CHROM}), as defined in Moers et al. (2005), is at least 2 or higher, preferably at least 3 or higher, such as 4 or higher. The SSF_{CHROM} was defined by Moers et al. (2005) as the ratio of enzyme activity toward WU-AX over enzyme activity toward WE-AX. Endoxylanase activity toward WU-AX was estimated by incubation of a water-insoluble chromogenic substrate with a range of enzyme concentrations in microtiter plates, followed by colorimetric measurement of the dye released in the supernatant. A similar approach using water-soluble substrate and ethanol precipitation of unhydrolysed AX fragments was used to estimate enzyme activity toward WE-AX (Moers et al. 2005). Endoxylanases of the Glycosyl Hydrolase Family 11 (Henrissat 1991) have been shown to have a high affinity and/or selectivity for water-unextractable arabinoxylan. Therefore, family 11 endoxylanases are particularly suitable to be used in any method according to the present invention.

The term "arabinoxylan-oligosaccharides", abbreviated as AXOS, in the context of the present invention, refers to either xylo-oligosaccharides or arabino-xylo-oligosaccharides, or mixtures of xylo-oligosaccharides and arabino-xylo-oligosaccharides. Xylo-oligosaccharides refers to poly- or oligosaccharides consisting solely of unsubstituted beta-(1-4)-linked D-xylopyranosyl residues (xylose) with a degree of polymerisation between 2 and 100. Arabino-xylo-oligosaccharides refers to poly- or oligosaccharides consisting of a backbone of beta-(1-4)-linked D-xylopyranosyl residues (xylose) with a degree of polymerisation of the backbone between 1 and 100, with at least one alpha-L-arabinofuranosyl (arabinose) residue linked to one of the xylose residues of the backbone per molecule. Other substituents such as acetyl, alfa-glucuronyl, alfa-4-O-methylglucuronyl, galacturonyl, xylosyl, rhamnosyl, galactosyl, or glucosyl side chains, or short oligosaccharide side chains, can be attached to one or more of the xylose residues and hydroxycinnamic acids, such as ferulic acid, dehydrodiferulic acid, p-coumaric acid, caffeic acid or sinapic acid, can be linked to one or more of the arabinose units.

Soluble arabinoxylans refers to refers to polysaccharides consisting of a backbone of beta-(1-4)-linked D-xylopyranosyl residues (xylose) with a degree of polymerisation of the backbone exceeding 100, with at least one alpha-L-arabinofuranosyl (arabinose) residue linked to one of the xylose residues of the backbone per molecule. Other substituents such as acetyl, alfa-glucuronyl, alfa-4-O-methylglucuronyl, galacturonyl, xylosyl, rhamnosyl, galactosyl, or glucosyl side chains, or short oligosaccharide side chains, can be attached to one or more of the xylose residues and hydroxycinnamic acids, such as ferulic acid, dehydrodiferulic acid, p-coumaric acid, caffeic acid or sinapic acid, can be linked to one or more of the arabinose units.

The term "cereal", in the context of the present invention, refers to plants of the botanical family of the Poaceae, including but not limited to species such as (durum) wheat, triticale, barley, oats, rye, sorghum, maize, and rice.

The term "bran", in the context of the present invention, means a grain-derived mill stream fraction, whether derived from wet or dry milling, that is enriched in any or all of the tissues to be selected from aleurone, pericarp, and seed coat, as compared to the corresponding intact grain and/or has a lower starch concentration than the corresponding intact grain.

The term "inflorescence by-products", in the context of the present invention, means fractions enriched in any or all of the tissues to be selected from husks, chaff, sepals, pericarp, petals, pods, cobs, peduncles, rachis and pedicels, that are produced during the processes of ear threshing, fruit threshing or grain dehusking to generate clean grains or seeds.

The term "stem by-products" in the context of the present invention, means fractions enriched in stems and leaves, such as but not limited to straw and stalks, that are produced as by product from plants harvested for their seeds or fruits as main products.

The term "spent grains", in the context of the present invention, means the mainly water-insoluble fraction obtained after separating the water-soluble and water-insoluble fraction of an aqueous mash prepared from milled grains, such as is produced during for instance but not limited to the process of brewing or ethanol production from grains. The terms "soluble" or "solubilised", in the context of the present invention, refer to soluble in water as the solvent or solubilised in water as the solvent, respectively.

### Illustrative embodiment

### EXAMPLES

### EXAMPLE 1: synergy between acid-bases and enzyme-based solubilisation of AX

### Materials and methods

*Materials.* Ecopulp^{®} TX200A (ECX) is a commercial technical grade endoxylanase preparation from AB Enzymes (Darmstadt, Germany) produced through recombinant expression of a thermophilic mutant of a *Hypocrea jecorina* (anamorph *Trichoderma longibrachiatum,* formerly *T*. *reesei*) Glycosyl Hydrolase Family (GHF) 11 endoxylanase gene. Multifect^{®} CX 12 L (MFX) is a commercial food grade endoxylanase preparation from Genencor/Danisco (Palo Alto, USA) produced through recombinant expression of a *Hypocrea jecorina* (anamorph *Trichoderma longibrachiatum,* formerly *T*. *reesei*) GHF11 endoxylanase gene.

*Analytical methods.* The total saccharide content was determined by gas-liquid chromatographic analysis of the alditol acetates after acid hydrolysis of the samples in 2 N trifluoroacetic acid, followed by reduction with sodium borohydride and acetylation with acetic anhydride, as described by Courtin et al. (2000). β-D-Allose was used as internal standard and calibration samples, containing the monosaccharides D-glucose, D-galactose, D-mannose, D-xylose and L-arabinose, were included with each set of samples. The reducing end saccharide content was determined by gas-liquid chromatographic analysis of the alditol acetates after reduction with sodium borohydride, followed by acid hydrolysis and acetylation with acetic anhydride, as described by Courtin et al. (2000). The analysis of free monosaccharide content was very similar to that of total saccharides (Courtin et al. 2000), with the only difference that samples were not hydrolysed prior to reduction and acetylation to alditol acetates. Using gas chromatography results, the sum of polymeric water-soluble AX and AXOS contents (AX/AXOS) were estimated by formula (a). The average degree of polymerisation of the AX/AXOS (avDP) was calculated as indicated in formula (b). The sum of AX/AXOS, free arabinose and free xylose (AX/AXOS+A+X) was calculated as indicated in formula (c).
**(a)** AX/AXOS = 0.88 × [arabinose_{TOT} - arabinose_{FREE}] + [xylose_{RED} - xylose_{FREE}] + 0.88 × [xylose_{TOT} - xylose_{RED}]
**(b)** avDP = {[arabinose_{TOT} - arabinose_{FREE}] + [xylose_{TOT} - xylose_{FREE}]} / [xylose_{RED} - xylose_{FREE}]
**(c)** AX/AXOS+A+X = AX/AXOS* + arabinose_{FREE} + xylose_{FREE} *according to formula (a)

In the above formulae the subscripts TOT, RED and FREE refer to total, reducing end and free monosaccharide contents, respectively, and the factor 0.88 corrects for the incorporation of water during hydrolysis of pentose sugars (Courtin et al. 2009).

*Determination of the activity of the enzymes.* Endoxylanase activity was determined using water-insoluble azurine cross-linked arabinoxylan (Xylazyme AX tablets, Megazyme, Bray, Ireland) as described in Megazyme Data Sheet 9/95. The enzymes were assayed in appropriate dilutions in 25 mM sodium acetate buffer, pH 5.6, at 35°C during 10 minutes. The absorbance at 590 nm was measured with an Ultraspec III UV/Visible spectrophotometer (Pharmacia Biotech, Uppsala, Sweden). One Unit (U) of enzyme activity was the amount of enzyme required to yield an absorbance of 1.0 after 10 minutes at 590 nm under the assay conditions.

### Results and discussion

Wheat bran was suspended in water (10% w/w dry matter) in a stirred tank and the mash was heated to 90°C. An α-amylase preparation (Termamyl 120LS, Novozymes, Bagsvaerd, Denmark; 1 ml/kg bran) was added and allowed to react under continuous stirring for 90 min at 90°C to hydrolyse the starch. The slurry was filtered and the filter cake washed with demineralised water. The washed residue was called destarched wheat bran. The yield of destarched wheat bran over starting material was 64.6% (w/w dry matter).

Destarched wheat bran was subjected to different acid treatments, endoxylanase treatments and combinations of acid treatments and endoxylanase treatments, in some cases with pH adjustments by calcium hydroxide addition. The treatment conditions are specified in Table 1. After the treatments specified in Table 1, the slurry was filtered on a 100 µm filter. Samples of the filtrates were boiled during 10 minutes to inactivate the enzymes, cooled to room temperature, and centrifuged at 10000 g for 15 minutes to obtain a clarified supernatant. The supernatant fractions were lyophilised and analysed for total saccharides, reducing end saccharides and free monosaccharides. The results of these analyses are shown in Table 2.

As can be seen in Table 2, the recovery of water-soluble AX and AXOS, free arabinose and free xylose (AX/AXOS+A+X) is markedly higher when applying a combination of both the enzyme-based and acid-based AX solubilisation steps. The increase due to the combination of the acid-based and enzyme-based AX solubilisation steps is seen for both the less stringent acid treatment conditions (25 mM H₂SO₄, 92°C, 150 min) as well as for the more stringent acid treatment conditions (25 mM H₂SO₄, 120°C, 45 min), but it is more pronounced in the latter conditions. For instance the recovery of AX/AXOS+A+X was 49.2% for the acid treatment at 120°C alone, 38.7% for the enzyme-based treatment with MFX alone, 65.3% for the combination of enzyme-based treatment with MFX and acid-based treatment at 120°C, and 70.6% for the reverse order combination (Table 2). Thus, the increase due to the combination of the enzyme-based and acid-based AX solubilisation steps is observed in case the enzyme-based AX solubilisation step is followed by the acid-based AX solubilisation step, as well as in the reverse order. In case more hydrolysis of the solubilised AX or AXOS to xylose and arabinose is desired, the stringency of the acid concentration, temperature or incubation time can be further increased.

### REFERENCES

AOAC, 1995. Official Methods of Analysis, 16th edition. Method 990.03. Association of Official Analytical Chemists, Washington DC, USA.
Andersson, R. and Aman, P. (2001) Cereal arabinoxylan: occurrence, structure and properties. In: Advanced dietary fibre technology. pp. 301-314. McCleary, B. V. and Prosky, L, Eds. Blackwell Science Ltd, Oxford.
Biely, P., Vrsanska, M., Tenkanen, M., Kluepfel, D. (1997) J Biotechnol, 57: 151-166
Carvalheiro F., Esteves, M.P., Parajo J.C., Pereira, H., Girio, F.M. (2004) Production of oligosaccharides by autohydrolysis of brewery's spent grain. Bioresource Technol 91: 93-100
Cloetens, L., De Preter, V., Swennen, K.., Broekaert, W.F., Courtin, C.M., Delcour, J.A., Rutgeerts, P., and Verbeke, K. (2008) Dose-response effect of arabinoxylo-oligosaccharides on gastrointestinal motility and on colonic bacterial metabolism in healthy volunteers. J. Am. Coll. Nutr. 27:512-518.
Courtin, C.M., Van den Broeck, H. and Delcour, J.A. (2000). Determination of reducing end sugar residues in oligo- and polysaccharides by gas liquid chromatography. Journal of Chromatography A, 866, 97-104.
Courtin, C.M.and Delcour, J.A. (2001) Relative Activity of Endoxylanases Towards Water-extractable and Water-unextractable Arabinoxylan. J. Cereal Sci, 33: 301-312.
Courtin, C.M., K. Swennen, W.F. Broekaert, O. Lescroart, O. Onagbesan, J. Buyse, E. Decuypere, T. Van de Wiele, M. Marzoratti, W. Verstraete, G. Huyghebaert, and J.A. Delcour (2008). Dietary inclusion of wheat bran arabinoxylooligosaccharides has beneficial nutritional effects on chickens. Cereal Chem. 85: 607-613.
Delcour, J.A., Van Win, H., Grobet, P.J., 1999. Distribution and structural variation of arabinoxylans in common wheat mill streams. Journal of Agricultural and Food Chemistry 47: 271-275.
Garrote, G., Dominguez, H. and Parajo, J. C. (2002) Autohydrolysis of corncob: study of non-isothermal operation for xylooligosaccharide production. J. Food Eng. 52: 211-218.
Gibson , G.R. and Roberfroid M.B. (1995) Dietary modulation of the human colonic microbiota: introducing the concept of prebiotics. J. Nutr. 125: 1401-1412.
Gruppen, H., Hamer, R.J. and Voragen, A.G.J. (1992). Water-unextractable cell wall material from wheat flour. II. Fractionation of alkali-extracted polymers and comparison with water-extractable arabinoxylans. Journal of Cereal Science, 16: 53-67.
Hahn-Hägerdal B, Karhumaa K, Fonseca C, Spencer-Martins I, Gorwa-Grauslund MF (2007) Towards industrial pentose-fermenting yeast strains. Appl Microbiol Biotechnol 74:937-953.
Henrissat B (1991) A classification of glycosyl hydrolases based on amino-acid sequence similarities. Biochem. J. 280:309-316.
Hollmann J, Lindhauer MG (2005) Pilot-scale isolation of glucuronoarabinoxylans from wheat bran. Carbohydr. Polym. 59: 225-230
Izydorczyk, M. S. and Biliaderis, C. G. (1995) Cereal arabinoxylans: Advances in structure and physicochemical properties. Carbohydr. Polym. 28: 33-48.
Kabel, M. A., Carvalheiro, F., Garrote, G., Avgerinos, E., Koukios, E., Parajo, J. C., Girio, F. M., Schols, H. A. and Voragen, A. G. J. (2002) Hydrothermally treated xylan rich by-products yield different classes of xylo-oligosaccharides. Carbohydr. Polym. 50: 47-56.
Lyon, T.P., Kesall, D.R., Murtogh, J.E. (1995) The ethanol textbook. Nothingham University Press.
Maes, C., Delcour, J. A. (2001). Alkaline hydrogen peroxide extraction of wheat bran non-starch polysaccharides. J. Cereal Sci. 34: 29-35.
Maes, C., Vangeneugden, B. and Delcour, J.A. (2004). Relative activity of two endoxylanases towards water-unextractable arabinoxylans in wheat bran. J. Cereal Sci. 39: 181-186.
Meuser, F., Suckow, P. (1986) Non-starch polysaccharides. In Chemistry and Physics of Baking. Blanshard, J. M. V., Frazier, P. J., Galliard, T., Eds. Royal Society of London. London, UK pp 43-61.
Moers, C, Celus, I., Brijs, K, Courtin, C. M., Delcour, J.A. (2005) Endoxylanase substrate selectivity determines degradation of wheat water-extractable and water-unextractable arabinoxylan. Carbohydrate Research 340: 1319-1327.
Ohta T, Semboku N, Kuchii A, Egashira Y & Sanada H (1997) Antioxidant activity of com bran cell-wall fragments in the LDL oxidation system. Journal of Agricultural and Food Chemistry 45: 1644-1648.
Palmarola-Adrados, B., Choteborska, P., Galbe, M., Zacchi, G. (2005) Ethanol production from non-starch carbohydrates of wheat bran. Bioresource Technology 96: 843-850.
Roberfroid, M.B. (1998) Prebiotics and synbiotics: concepts and nutritional properties. Brit. J. Nutr. 80:S197-S202.
Sanjust, E., Salis, A., Rescigno, A., Curreli, N., Rinaldi, A. (2004) Xylose production from durum wheat bran: enzymic versus chemical methods. Food Sci. Tech. Int. 10: 11-14.
Sorensen HR, Pedersen S, and Meyer AS (2006) Optimization, of reaction conditions for enzymatic viscosity reduction and hydrolysis of wheat arabinoxylan in an industrial ethanol fermentation residue. Biotechnol. Prog. 22: 505-513.
Swennen, K, Courtin, C.M., Lindemans GCJE, Delcour, J.A. (2006) Large-scale production and characterisation of wheat bran arabinoxylooligosaccharides. J. Sci. Food Agric. 86: 1722-1731.
Van Craeyveld, V., Swennen, K, Domez, E., Van de Wiele, T., Marzorati, M., Verstraete, W., Delaedt, Y., Onagbesan, O., Decuypere, E., Buyse, J., De Ketelaere, B., Broekaert, W.F., Delcour, J.A., and Courtin, C.M. (2008) Structurally different wheat-derived arabinoxylooligosaccharides have different prebiotic and fermentation properties in rats. J. Nutr. 138: 2348-2355.
Van Loo, J.A.E. (2004) Prebiotics promote good health. The basis, the potential, and the emerging evidence. J Clin Gastroenterol 38: S70-S75.
Ward, O.P. and Singh, A. (2002) Bioethanol technology: developments and perspectives. Adv. Appl. Micorbiol. 51: 53:80.
Yamada H., Itoh, K., Morishita, Y., Taniguchi, H. (1993) Structure and properties of oligosaccharides from wheat bran. Cereal Foods World 38: 490-492.
Yuan XP, Wang J & Yao HY (2005) Antioxidant activity of feruloylated oligosaccharides from wheat bran. Food Chemistry 90: 759-764.

### TABLES

Table 1: Specification of the treatment conditions of destarched wheat bran for the experiment in example 1. The dry matter of the slurries was of the first and second treatments were 7% (w/w). MFX refers to endoxylanase Multifect CX 12 L, DM is dry matter of the substrate.

| **Treatment number** | **First treatment** | **pH adaptation after first treatment** | **Second treatment** | **pH adaptation after second treatment** |
|---|---|---|---|---|
| 1 | 25 mM H₂SO₄, 150 min at 92°C | 25 mM Ca(OH)₂ | none | none |
| 2 | 25 mM H₂SO₄, 45 min at 120°C | 25 mM Ca(OH)₂ | none | none |
| 3 | MFX (3 ml/kg DM), 6hour at 50°C | none | none | none |
| 4 | MFX (3 ml/kg DM), 6hour at 50°C | none | 25 mM H₂SO₄, 150 min at 92°C | 25 mM Ca(OH)₂ |
| 5 | MFX (3 ml/kg DM), 6hour at 50°C | none | 25 mM H₂SO₄, 45 min at 120°C | 25 mM Ca(OH)₂ |
| 6 | 25 mM H₂SO₄,150 min at 92°C | 25 mM Ca(OH)₂ | MFX (3 ml/kg DM), 3 hour at 50°C | none |
| 7 | 25 mM H₂SO₄, 45 min at 120°C | 25 mM Ca(OH)₂ | MFX (3 ml/kg DM), 3 hour at 50°C | none |

**Table 2: Analysis of water-solubilised fraction after treatment of destarched wheat bran as specified in Table 1.**

| **Treatment number (see Table 1)** | **AX/AXOS+A+X^{a} (%, w/w)** | **AX/AXOS^{b} (%, w/w)** | **A+X^{c} (%, w/w)** | **avDP^{d}** | **Dry mass recovery (%)^{e}** | **AX/AXOS+A+X recovery (%)^{f}** |
|---|---|---|---|---|---|---|
| 1 | 42.2 | 23.5 | 18.7 | 25 | 15.0% | 27.5% |
| 2 | 52.0 | 31.2 | 20.8 | 14 | 21.8% | 49.2% |
| 3 | 64.8 | 64.3 | 0.5 | 6 | 13.7% | 38.7% |
| 4 | 56.1 | 41.6 | 14.5 | 6 | 21.3% | 51.9% |
| 5 | 56.5 | 37.4 | 19.1 | 5 | 26.6% | 65.3% |
| 6 | 55.3 | 38.8 | 16.5 | 4 | 20.5% | 49.4% |
| 7 | 58.5 | 40.7 | 17.8 | 4 | 27.7% | 70.6% |

| | | | | | | |
|---|---|---|---|---|---|---|
| ^{a}AX/AXOS+A+X = sum of content of water-soluble AX and AXOS, free arabinose and free xylose ^{b}AX/AXOS = content of water-soluble AX and AXOS ^{c}A+X = free arabinose and xylose ^{d}avDP = average degree of polymerisation of water-soluble AX and AXOS ^{e}Expressed as %(w/w) dry mass of water-solubilised fraction over dry mass of the bran used as starting material in the process ^{f}calculated as (% dry mass recovery) x (% AX/AXOS+A+X of water-solubilised fraction) / (% AX/AXOS+A+X of bran used as starting material) | | | | | | |

## Claims

1. A method for the extraction and isolation of solubilised arabinoxylan depolymerisation products wherein arabinoxylan-containing plant material is mashed in water and treated with an appropriate concentration of an endoxylanase enzyme preparation in order to enzymatically depolymerise a first fraction of the arabinoxylans comprised in said plant material and wherein said enzymatic treatment is followed by an acid treatment comprising the incubation of said plant material in an acidified aqueous mash in order to obtain a depolymerisation and solubilisation of a second fraction of the arabinoxylans comprised in said plant material; said method further comprising separating from said mashed plant material a water-solubilised fraction, which comprises at least part of said solubilised arabinoxylan depolymerisation products.

2. The method according to claim 1, wherein following the endoxylanase treatment the endoxylanase-containing mash of said arabinoxylan-containing plant material is subjected to the acid treatment and wherein said acid treatment is followed by the separation of said mash into i) a water-solubilised fraction comprising both the enzymatic and acid solubilised arabinoxylan depolymerisation products and ii) the water-insoluble plant material residue.

3. The method according to claim 1, wherein the endoxylanase treatment is followed by a separation of said mash into i) a first water-solubilised fraction comprising enzymatic solubilised arabinoxylan depolymerisation products and ii) a first water-insoluble plant material residue, and wherein said first water-insoluble plant residue is resuspended in water in order to obtain a second mash, which is subjected to the acid treatment followed by separation of said second mash into iii) a second water-solubilised fraction comprising acid solubilised arabinoxylan depolymerisation products and iv) a second water-insoluble plant material residue.

4. The method according to any one of the claims 1 to 3, wherein said endoxylanase treatment comprises the use of an endoxylanase with high selectivity for water-unextractable arabinoxylan.

5. The method according to any one of the claims 1 to 4, wherein the endoxylanase treatment involves the incubation of the mash with an endoxylanase enzyme preparation for a period of 2 to 12 hours.

6. The method according to any one of the claims 1 to 5, wherein the acid treatment involves the addition to said mashed arabinoxylan-containing plant material of a strong acid at a concentration between 0.02 and 0.4 N.

7. The method according to claim 6, wherein said acid treatment involves the treatment of said mashed arabinoxylan-containing plant material during 5 to 180 minutes.

8. The method according to claims 6 or 7, wherein said acid treatment involves the treatment of said mashed arabinoxylan-containing plant material at a temperature between 80 and 180°C.

9. The method according to any one of claims 6 to 8, wherein said strong acid is selected out of the group consisting of phosphoric acid, hydrochloric acid, perchloric acid, nitric acid, or sulfuric acid.

10. The method according to any one of the claims 1 to 9, wherein the solubilised arabinoxylan depolymerisation products are either soluble arabinoxylan, arabinoxylan-oligosaccharides, xylose or arabinose or mixtures of two or more of these compounds.

11. The method according any one of the claims 1 to 10, wherein said separated water-solubilised fractions are further separated using filtration or chromatography techniques or combinations thereof to obtain preparations comprising an increased concentration of a particular solubilised arabinoxylan depolymerisation product as compared to the concentration of this product in said water-solubilised fraction.

12. The method according any one of the claims 1 to 11, wherein the said separated water-solubilised fractions are concentrated using means for water removal.

13. The method according to any one of claims 1 to 12, wherein said arabinoxylan-containing plant material is destarched plant material.

14. The method according any one of the claims 1 to 13, wherein said arabinoxylan-containing plant material is selected out of the group consisting of bran, inflorescence by-products, stem by-products, or spent grains, or combinations thereof.

15. The method according to any one of the claims 1 to 14, wherein said water-solubilised fractions comprise on a dry weight basis at least 40% of one or more of the arabinoxylan depolymerisation products soluble arabinoxylan, arabinoxylan-oligosaccharides, xylose and arabinose.

## Patentansprüche

1. Verfahren für die Extraktion und Isolierung von solubilisierten Arabinoxylan-Depolymerisationsprodukten, wobei Arabinoxylanhältiges Pflanzenmaterial in Wasser gemischt und mit einer geeigneten Konzentration einer Endoxylanase-Enzymzubereitung behandelt wird, um eine erste Fraktion der Arabinoxylane, die in dem Pflanzenmaterial enthalten ist, enzymatisch zu depolymerisieren, und wobei auf die enzymatische Behandlung eine Säurebehandlung folgt, die die Inkubation des Pflanzenmaterials in einer angesäuerten wässerigen Mischung umfasst, um eine Depolymerisation und Solubilisierung einer zweiten Fraktion der Arabinoxylane, die in dem Pflanzenmaterial enthalten ist, zu erhalten; wobei das Verfahren des Weiteren das Abtrennen einer wassersolubilisierten Fraktion von dem gemischten Pflanzenmaterial umfasst, die zumindest einen Teil der solubilisierten Arabinoxylan-Depolymerisationsprodukte umfasst.

2. Verfahren nach Anspruch 1, wobei nach der Endoxylanase-Behandlung die Endoxylanase-hältige Mischung des Arabinoxylan-hältigen Pflanzenmaterials der Säurebehandlung unterzogen wird, und wobei auf die Säurebehandlung die Trennung der Mischung in i) eine wassersolubilisierte Fraktion, die sowohl die enzymatischen wie auch säuresolubilisierten Arabinoxylan-Depolymerisationsprodukte umfasst, und ii) den wasserunlöslichen Pflanzenmaterialrest folgt.

3. Verfahren nach Anspruch 1, wobei auf die Endoxylanase-Behandlung eine Trennung der Mischung in i) eine erste wassersolubilisierte Fraktion, die enzymatische solubilisierte Arabinoxylan-Depolymerisationsprodukte umfasst, und ii) einen ersten wasserunlöslichen Pflanzenmaterialrest folgt und wobei der erste wasserunlösliche Pflanzenrest in Wasser resuspendiert wird, um eine zweite Mischung zu erhalten, die der Säurebehandlung unterzogen wird, wonach eine Trennung der zweiten Mischung in iii) eine zweite wassersolubilisierte Fraktion, die säuresolubilisierte Arabinoxylan-Depolymerisationsprodukte umfasst, und iv) einen zweiten wasserunlöslichen Pflanzenmaterialrest folgt.

4. Verfahren nach einem der Ansprüche 1 bis 3, wobei die Endoxylanase-Behandlung die Verwendung einer Endoxylanase mit hoher Selektivität für wasserunextrahierbares Arabinoxylan umfasst.

5. Verfahren nach einem der Ansprüche 1 bis 4, wobei die Endoxylanase-Behandlung die Inkubation der Mischung mit einer Endoxylanase-Enzymzubereitung für einen Zeitraum von 2 bis 12 Stunden beinhaltet.

6. Verfahren nach einem der Ansprüche 1 bis 5, wobei die Säurebehandlung die Zugabe einer starken Säure bei einer Konzentration zwischen 0,02 und 0,4 N zu dem gemischten Arabinoxylan-hältigen Pflanzenmaterial beinhaltet.

7. Verfahren nach Anspruch 6, wobei die Säurebehandlung die Behandlung des gemischten Arabinoxylan-hältigen Pflanzenmaterials über 5 bis 180 Minuten beinhaltet.

8. Verfahren nach den Ansprüchen 6 oder 7, wobei die Säurebehandlung die Behandlung des gemischten Arabinoxylan-hältigen Pflanzenmaterials bei einer Temperatur zwischen 80 und 180°C beinhaltet.

9. Verfahren nach einem der Ansprüche 6 bis 8, wobei die starke Säure ausgewählt ist aus der Gruppe bestehend aus Phosphorsäure, Salzsäure, Perchlorsäure, Salpetersäure oder Schwefelsäure.

10. Verfahren nach einem der Ansprüche 1 bis 9, wobei die solubilisierten Arabinoxylan-Depolymerisationsprodukte entweder lösliches Arabinoxylan, Arabinoxylan-Oligosaccharide, Xylose oder Arabinose oder Gemische von zwei oder mehr dieser Verbindungen sind.

11. Verfahren nach einem der Ansprüche 1 bis 10, wobei die abgetrennten wassersolubilisierten Fraktionen mittels Filtration oder Chromatographietechniken oder Kombinationen davon weiter getrennt werden, um Zubereitungen zu erhalten, die eine erhöhte Konzentration eines bestimmten solubilisierten Arabinoxylan-Depolymerisationsprodukts im Vergleich zu der Konzentration dieses Produkts in der wassersolubilisierten Fraktion umfassen.

12. Verfahren nach einem der Ansprüche 1 bis 11, wobei die abgetrennten wassersolubilisierten Fraktionen durch Mittel zur Wasserentfernung konzentriert werden.

13. Verfahren nach einem der Ansprüche 1 bis 12, wobei das Arabinoxylan-hältige Pflanzenmaterial entstärktes Pflanzenmaterial ist.

14. Verfahren nach einem der Ansprüche 1 bis 13, wobei das Arabinoxylan-hältige Pflanzenmaterial ausgewählt ist aus der Gruppe bestehend aus Kleie, Infloreszenznebenprodukten, Stielnebenprodukten oder Treber oder Kombinationen davon.

15. Verfahren nach einem der Ansprüche 1 bis 14, wobei die wassersolubilisierten Fraktionen auf einer Trockengewichtsbasis mindestens 40% von einem oder mehreren der Arabinoxylan-Depolymerisationsprodukte, löslichem Arabinoxylan, Arabinoxylan-Oligosaccharide, Xylose und Arabinose umfassen.

## Revendications

1. Procédé pour l'extraction et l'isolement de produits de dépolymérisation d'arabinoxylanes solubilisés dans lequel une matière végétale contenant des arabinoxylanes est écrasée dans de l'eau et traitée avec une concentration appropriée d'une préparation enzymatique d'endoxylanase afin de dépolymériser de façon enzymatique une première fraction des arabinoxylanes inclus dans ladite matière végétale et dans lequel ledit traitement enzymatique est suivi par un traitement à l'acide comprenant l'incubation de ladite matière végétale dans une pâte aqueuse acidifiée afin d'obtenir une dépolymérisation et une solubilisation d'une seconde fraction des arabinoxylanes inclus dans ladite matière végétale ; ledit procédé comprenant en outre la séparation d'une fraction solubilisée dans l'eau à partir de ladite matière végétale écrasée, fraction qui comprend au moins une partie desdits produits de dépolymérisation d'arabinoxylanes solubilisés.

2. Procédé selon la revendication 1, dans lequel, après le traitement à l'endoxylanase, la pâte contenant l'endoxylanase de ladite matière végétale contenant des arabinoxylanes est soumise au traitement à l'acide et dans lequel ledit traitement à l'acide est suivi par la séparation de ladite pâte en i) une fraction solubilisée dans l'eau comprenant des produits tant de dépolymérisation d'arabinoxylanes solubilisés acides qu'enzymatiques et ii) résidu de matière végétale insoluble dans l'eau.

3. Procédé selon la revendication 1, dans lequel le traitement à l'endoxylanase est suivi par une séparation de ladite pâte en i) une première fraction solubilisée dans l'eau comprenant des produits de dépolymérisation d'arabinoxylanes solubilisés enzymatiques et ii) un premier résidu de matière végétale insoluble dans l'eau, et dans lequel ledit premier résidu végétal insoluble dans l'eau est remis en suspension dans l'eau afin d'obtenir une seconde pâte, qui est soumise au traitement à l'acide suivi par la séparation de ladite seconde pâte en iii) une seconde fraction solubilisée dans l'eau comprenant des produits de dépolymérisation d'arabinoxylanes solubilisés acides et iv) un second résidu de matière végétale insoluble dans l'eau.

4. Procédé selon l'une quelconque des revendications 1 à 3, dans lequel ledit traitement à l'endoxylanase comprend l'utilisation d'une endoxylanase ayant une sélectivité élevée en ce qui concerne les arabinoxylanes non extractibles à l'eau.

5. Procédé selon l'une quelconque des revendications 1 à 4, dans lequel le traitement à l'endoxylanase implique l'incubation de la pâte avec une préparation enzymatique d'endoxylanase pendant un temps de 2 à 12 heures.

6. Procédé selon l'une quelconque des revendications 1 à 5, dans lequel le traitement à l'acide implique l'ajout à ladite matière végétale écrasée contenant des arabinoxylanes d'un acide fort à une concentration entre 0,02 et 0,4 N.

7. Procédé selon la revendication 6, dans lequel ledit traitement à l'acide implique le traitement de ladite matière végétale écrasée contenant des arabinoxylanes pendant 5 à 180 minutes.

8. Procédé selon les revendications 6 ou 7, dans lequel ledit traitement à l'acide implique le traitement de ladite matière végétale écrasée contenant des arabinoxylanes à une température entre 80 et 180 °C.

9. Procédé selon l'une quelconque des revendications 6 à 8, dans lequel ledit acide fort est sélectionné à partir du groupe constitué par l'acide phosphorique, l'acide chlorhydrique, l'acide perchlorique, l'acide nitrique, ou l'acide sulfurique.

10. Procédé selon l'une quelconque des revendications 1 à 9, dans lequel les produits de dépolymérisation d'arabinoxylanes solubilisés sont soit des arabinoxylanes solubles, des arabinoxylanes-oligosaccharides, du xylose ou de l'arabinose soit des mélanges de deux ou plusieurs de ces composés.

11. Procédé selon l'une quelconque des revendications 1 à 10, dans lequel lesdites fractions séparées solubilisées dans l'eau sont en outre séparées en utilisant des techniques de filtration ou de chromatographie ou des combinaisons de celles-ci pour obtenir des préparations comprenant une concentration accrue d'un produit de dépolymérisation d'arabinoxylane solubilisé particulier en comparaison à la concentration de ce produit dans ladite fraction solubilisée dans l'eau.

12. Procédé selon l'une quelconque des revendications 1 à 11, dans lequel lesdites fractions séparées solubilisées dans l'eau sont concentrées en utilisant un moyen pour l'enlèvement d'eau.

13. Procédé selon l'une quelconque des revendications 1 à 12, dans lequel ladite matière végétale contenant des arabinoxylanes est une matière végétale désamidonnée.

14. Procédé selon l'une quelconque des revendications 1 à 13, ladite matière végétale contenant des arabinoxylanes est sélectionnée à partir du groupe constitué par le son, des sous-produits d'inflorescence, des sous-produits de tige, ou de la drèche, ou des combinaisons de ceux-ci.

15. Procédé selon l'une quelconque des revendications 1 à 14, dans lequel lesdites fractions solubilisées dans l'eau comprennent sur une base de poids sec au moins 40 % d'un ou plusieurs des produits de dépolymérisation d'arabinoxylane sont des arabinoxylanes solubles, des arabinoxylanes-oligosaccharides, du xylose et de l'arabinose.
